# EUROPEAN PATENT APPLICATION

(11) **EP 1 205 888 A2**
(43) Date of publication of application: **15.05.2002**
(21) Application number: 00118623.8
(22) Date of filing: 28.08.2000
(51) Int. Cl.: G07F 7/10

(54) **Certificate issuing method, system and computer readable storage medium**

(30) Priority: 19.07.2000 JP 2000218407
(71) Applicant: Hitachi, Ltd., Chiyoda-ku, Tokyo 101-8010 (JP)
(72) Inventor: Tomiyama, Tomochika, c/o Hitachi,Ltd. Intell.Prop., Chiyoda-ku, Tokyo 100-8220 (JP); Kawatsura, Yoshiaki, c/o Hitachi,Ltd. Intell.Prop., Chiyoda-ku, Tokyo 100-8220 (JP)
(74) Representative: Strehl Schübel-Hopf & Partner

(57) **Abstract**

A method in which only a legitimate party can receive a certificate securely from a certificate service provider (100) as the result of a consumer delivering a certificate receiving permit to a store device (300), i.e. the other party of a transaction and a method in which a consumer entrusts the certificate service provider (100) to issue a certificate and store the issued certificate by delivering a certificate acquisition permit to the provider are disclosed. In response to a certificate acquisition permit issue request (510) from a store device (300), a consumer card device (200) sends a certificate acquisition permit issue response (520) including a certificate receiving permit and a certificate acquisition permit containing the certificate name to the store device (300), i.e. the other party of a transaction. The store device (300) sends a certificate acquisition request (530) including the certificate receiving permit and the certificate acquisition permit to the certificate service provider device (100). The certificate service provider device (100), which may hold a corresponding certificate, encrypts it by the store public key and sends it to the store device (300). The corresponding certificate, if not available, is acquired from a certificate issuing organization device (400). The certificate service provider device (100) adds the acquired certificate to a certificate data base and sends it to the store device (300) as a certificate acquisition response (540). The store device thus can acquire the certificate required for the transaction and can carry out the transaction.

## Description

### BACKGROUND OF THE INVENTION

The present invention relates to a method and a service system for issuing a certificate suitably applied to the internet business, the service business and public services, and a recording medium for storing the processing program.

Certificates (medical examination certificate, labor certificate, tax payment certificate, official auto inspection certificate, garage certificate, outstanding amount certificate, etc.) issued by third-party organizations (hospital, municipal office, bank, employer, etc.) are required on many occasions for various transactions and applications. These certificates, which have conventionally been issued in paper, have come to be issued and received by communication as the result of the progress of the communication technologies and the improvement of what is called the infrastructure. The electronic signature utilizing the public-key cryptography has been conceived as a technique applicable to the issue and receipt of certificates by communication. Also, the technique of the certificate authority and the registration authority have been worked out as an organization for issuing the certificates to users.

Further, a technique by which a person authorized by a user can acquire the information which the user has registered in an information bank is disclosed in JP-A-11-250165. Also, a method for issuing various certificates by authenticating a principal or an agent appointed by the principal through a pass word has been described in JP-A-7-334577.

### SUMMARY OF THE INVENTION

An object of the present invention is to provide a certificate issuing method, system and a computer readable recording medium through which various certificates required for transactions and applications are issued safely.

Another object of the invention is to provide a certificate issuing method, system and a computer readable recording medium through which certificates can be safely issued only to legitimate persons requiring them even when the third-party organizations issuing the certificates (hospitals, municipal offices, banks, employers, etc.) suspend their services.

In order to achieve the objects mentioned above, according to the invention, there is provided a system for providing the certificate issuing service in the following steps, for example.

A certificate receiving permit prepared by the user (consumer) and describing the name of the certificate, the receiver identifier and the due date with the consumer's signature and a certificate acquisition permit prepared by the consumer and describing the name of the certificate, the acquirer identifier and the due date with the consumer's signature are sent by the user (consumer) to a store device (not limited to that of a store conducting commercial transactions but including organizations for receiving applications) with which the user transacts. The store device sends the certificate receiving permit and the certificate acquisition permit to a certificate service provider device. In the certificate service provider device, the certificate receiving permit is verified and the certificate indicated on the certificate receiving permit is retrieved from the certificate data base held by the certificate service provider device, and if the particular certificate is found, it is encrypted by the store public key and sent to the store device. In the case where the corresponding certificate is not found, the certificate acquisition permit is sent to a certificate issuing organization device. In the certificate issuing organization device, the certificate acquisition permit is verified, the certificate data indicated therein is prepared, and with the signature of the certificate issuing organization, encrypted by the public key of the certificate service provider device, and sent to the certificate service provider device. In the certificate service provider device, the encrypted certificate is decrypted, added to the certificate data base, encrypted by the store public key and sent to the store device. The store device, which thus has successfully acquired the certificate required for the transaction, can carry out the transaction.

Specifically, according to one aspect of the invention, there is provided a method of issuing a certificate in such a manner that the card device of the user is connected to a store device at which the required certificate data on the user can be acquired, comprising the steps of:
connecting a certificate service provider device to a communication network connected to the store device and the certificate issuing organization device for issuing the certificate data, and sending to the card device a certificate acquisition permit issue request message including a message identifier, the name of the certificate of the certificate data to be acquired, the name of the certificate issuing organization for issuing the certificate data, the store identifier for the store device and the store public key certificate of the store device;
verifying the store public key certificate in the card device that has received the certificate acquisition permit issue request message, generating a receiving permit including the certificate name and the store identifier, generating the signature of the user constituting a receiving permit signature value for the receiving permit, and sending to the store device a certificate acquisition permit issue response message including the receiving permit, the receiving permit signature value, the message identifier and the user public key certificate;
verifying the user public key certificate and the receiving permit signature value in the store device that has received the certificate acquisition permit issue response message, and transmitting to the certificate service provider device a certificate acquisition request message including the receiving permit, the receiving permit signature value, the message identifier and the store public key certificate;
verifying the store public key certificate and the receiving permit signature value in the certificate service provider device that has received the certificate acquisition request message, encrypting, by the store public key, the certificate data of the certificate name included in the receiving permit, which certificate data may be held in the certificate service provider device, and transmitting the encrypted certificate data and the message identifier to the store device as a certificate acquisition response message; and
acquiring the certificate data by decrypting the encrypted certificate data by the store private key in the store device that has received the certificate acquisition response message.

According to another aspect of the invention, there is provided a method of issuing a certificate in such a manner that the card device of the user is connected to a store device at which the required certificate data on the user can be acquired, comprising the steps of:
connecting a certificate service provider device to a communication network connected to the store device and the certificate issuing organization device for issuing the certificate data, and sending from the store device to the card device a certificate acquisition permit issue request message including a message identifier, the name of the certificate of the certificate data to be acquired, the name of the certificate issuing organization for issuing the certificate data, the store identifier for the store device and the store public key certificate of the store device;
verifying the store public key certificate in the card device that has received the certificate acquisition permit issue request message, generating a receiving permit including the certificate name and the store identifier, generating the signature of the user constituting the receiving permit signature value for the receiving permit, generating an acquisition permit including the certificate name and the certificate service provider identifier, generating the signature of the user constituting the acquisition permit signature value for the acquisition permit, and sending a certificate acquisition permit issue response message including the receiving permit, the receiving permit signature value, the acquisition permit, the acquisition permit signature value, the message identifier and the user public key certificate to the store device;
verifying the user public key certificate, the receiving permit signature value and the acquisition permit signature value in the store device that has received the certificate acquisition permit issue response message, and transmitting to the certificate service provider device a certificate acquisition request message including the receiving permit, the receiving permit signature value, the acquisition permit, the acquisition permit signature value, the message identifier and the store public key certificate;
verifying the store public key certificate, the receiving permit signature value and the acquisition permit signature value in the certificate service provider device that has received the certificate acquisition request message, determining whether the certificate data of the certificate name included in the receiving permit is held in the certificate service provider device, encrypting, by the store public key, the certificate data of the certificate name included in the receiving permit and transmitting the encrypted certificate data and the message identifier to the store device as a certificate acquisition response message in the case where the certificate data is held in the certificate service provider device, or transmitting the acquisition permit of the certificate data, the acquisition permit signature value, the message identifier and the public key certificate of the certificate service provider to the certificate issuing organization device as a certificate issue request message in the case where the certificate data is not held in the certificate service provider device; and
verifying the provider public key certificate and the acquisition permit signature value in the certificate issuing organization device that has received the certificate issue request message, generating the certificate data of the certificate name included in the acquisition permit, attaching the signature to the certificate data using the private key of the certificate issuing organization, encrypting the certificate data with signature by the public key of the certificate service provider, and transmitting the encrypted certificate data, the message identifier and the public key certificate of the certificate issuing organization to the certificate service provider device as a certificate issue response message;
verifying the public key certificate of the certificate issuing organization in the certificate service provider device that has received the certificate issue response message, verifying the signature attached to the encrypted certificate data, acquiring the certificate data by decrypting the encrypted certificate data by the private key of the certificate service provider, holding and encrypting the acquired certificate data by the store public key in the certificate service provider device, and transmitting the encrypted certificate data and the message identifier to the store device as a certificate acquisition response message; and
acquiring the certificate data by decrypting the encrypted certificate data by the store private key in the store device that has received the certificate acquisition response message.

According to still another aspect of the invention, there is provided the method of issuing a certificate described above, wherein the receiving permit and/or the acquisition permit includes information on the due date, the certificate service provider device verifies the validity of the receiving permit and/or the acquisition permit in the received certificate acquisition request message by referring to the due date thereof, and the certificate issuing organization device verifies the validity of the acquisition permit in the received certificate issue request message by referring to the due date thereof.

According to a further aspect of the invention, there is provided the method of issuing a certificate described above, wherein the certificate service provider device transmits the certificate issue request message including the store public key certificate to the certificate issuing organization device, the certificate issuing organization that has received the certificate issue request message verifies the store public key certificate, encrypts the certificate data with the signature of the certificate issuing organization by the store public key and causes the certificate data encrypted by the store public key to be included in the certificate issue response message, and the certificate service provider device that has received the certificate issue response message uses the certificate data encrypted by the store public key included in the certificate issue response message instead of encrypting the certificate data by the store public key.

According to a still further aspect of the invention there is provided the method of issuing a certificate described above, wherein the user public key certificate is included in the certificate acquisition request message transmitted to the certificate service provider device from the store device, the certificate service provider device that has received the certificate acquisition request message transmits the certificate issue request message including the user public key certificate to the certificate issuing organization device, the certificate issuing organization device that has received the certificate issue request message verifies the user public key certificate, encrypts the certificate data with the signature of the certificate issuing organization by the user public key and causes the certificate data encrypted by the user public key to be included in the certificate issue response message, the certificate service provider device that has received the certificate issue response message causes the certificate data encrypted by the user public key to be included in the certificate acquisition response message, the store device that has received the certificate acquisition response message sends a process completion message including the certificate data encrypted by the user public key to the card device, and the card device that has received the process completion message acquires the certificate data by decrypts the encrypted certificate data using the user private key and registers the acquired certificate data in the storage means in the card device.

According to a yet further aspect of the invention, there is provided a certificate issue service system comprising a store device connected with a card device of the user, and a certificate issuing organization device and a certificate service provider device connected to the store device through a communication network:
wherein the store device includes means for sending a message identifier, the certificate name of the certificate data to be acquired, the name of the certificate issuing organization for issuing the certificate data, the store identifier for the store device and the store public key certificate of the store device to the card device as a certificate acquisition permit issue request message; means for verifying the user public key certificate and the receiving permit signature value included in the certificate acquisition permit issue response message upon receipt of the certificate acquisition permit issue response message sent from the card device, and transmitting a certificate acquisition request message including the receiving permit, the receiving permit signature value, the message identifier and the store public key certificate to the certificate service provider device; and means for acquiring the certificate data by decrypting the encrypted certificate data included in the certificate acquisition response message by the store private key upon receipt of the certificate acquisition response message transmitted from the certificate service provider device,
wherein the card device includes means for verifying the store public key certificate included in the certificate acquisition permit issue request message upon receipt of the certificate acquisition permit issue request message sent from the store device, generating the receiving permit including the certificate name and the storage identifier included in the certificate acquisition permit issue request message, generating the signature of the user constituting the receiving permit signature value for the receiving permit, and transmitting a certificate acquisition permit issue response message including the receiving permit, the receiving permit signature value, the message identifier and the user public key certificate to the store device, and
wherein the certificate service provider device includes means for verifying the store public key certificate and the receiving permit signature value included in the certificate acquisition request message upon receipt of the certificate acquisition request message transmitted from the store device, and encrypting, by the store public key, the certificate data of the certificate name included in the receiving permit which may be held in the certificate service provider device and transmitting a certificate acquisition message including the encrypted certificate data and the message identifier to the store device.

According to a still further aspect of the invention, there is provided a certificate issue service system comprising a store device connected with a card device of the user, a certificate issuing organization device and a certificate service provider device connected to the store device through a communication network:
wherein the store device includes means for sending a certificate acquisition permit issue request message including a message identifier, the certificate name of the certificate data to be acquired, the name of the certificate issuing organization for issuing the certificate data, the store identifier for the store device and the store public key certificate of the store device to the card device; means for verifying the user public key certificate, the receiving permit signature value and the acquisition permit signature value included in the certificate acquisition permit issue response message upon receipt of the certificate acquisition permit issue response message sent from the card device, and transmitting a certificate acquisition request message including the receiving permit, the receiving permit signature value, the acquisition permit certificate, the acquisition permit signature value, the message identifier and the store public key certificate to the certificate service provider device; and means for acquiring the certificate data by decrypting the encrypted certificate data included in the certificate acquisition response message by the store private key upon receipt of the certificate acquisition response message transmitted from the certificate service provider device,
wherein the card device includes means for verifying the store public key certificate included in the certificate acquisition permit issue request message upon receipt of the certificate acquisition permit issue request message sent from the store device, generating the receiving permit including the certificate name and the store identifier included in the certificate acquisition permit issue request message, generating the acquisition permit including the certificate name and the certificate service provider identifier included in the certificate acquisition permit issue request message, generating the signature of the user constituting the acquisition permit signature value for the acquisition permit, and transmitting a certificate acquisition permit issue response message including the receiving permit, the receiving permit signature value, the acquisition permit, the acquisition permit signature value, the message identifier and the user public key certificate to the store device, and
wherein the certificate service provider device includes means for verifying the store public key certificate, the receiving permit signature value and the acquisition permit signature value included in the certificate acquisition request message upon receipt of the certificate acquisition request message transmitted from the store device, determining whether the certificate data of the certificate name included in the receiving permit is held or not in the certificate service provider device, and encrypting the certificate data by the store public key and transmitting the encrypted certificate data and message identifier to the store device as a certificate acquisition response message in the case where the certificate data of the certificate name included in the receiving permit is held in the certificate service provider device, or transmitting a certificate issue request message including the acquisition permit of the certificate data, the acquisition permit signature value, the message identifier and the public key certificate of the certificate service provider to the certificate issuing organization device in the case where the certificate data of the certificate name included in the receiving permit is not held in the certificate service provider device; and means for verifying the public key certificate of the certificate issuing organization included in the certificate issue response message upon receipt of the certificate issue response message transmitted from the certificate issuing organization device, verifying the signature attached to the encrypted certificate data included in the certificate issue response message, acquiring the certificate data by decrypting the encrypted certificate data by the private key of the certificate service provider, holding the acquired certificate data in the certificate service provider device while at the same time encrypting the certificate data by the store public key, and transmitting the encrypted certificate data and the message identifier to the store device as a certificate acquisition response message, and
wherein the certificate issuing organization device includes means for verifying the provider public key certificate and the acquisition permit signature value included in the certificate issue request message upon receipt of the certificate issue request message transmitted from the certificate service provider device, generating the certificate data of the certificate name included in the acquisition permit, attaching the signature to the certificate data using the private key of the certificate issuing organization, encrypting the certificate data with the signature by the public key of the certificate service provider, and transmitting a certificate issue response message including the encrypted certificate data, the message identifier and the public key certificate of the certificate issuing organization to the certificate service provider device.

According to still another aspect of the invention, there is provided a certificate service provider device used for the certificate issue service in which the card device of the user is connected to the store device thereby to acquire the required certificate data on the user in the store device, comprising:
means connected to a communication network connected to the store device and a certificate issuing organization for issuing the certificate data, the means receiving the certificate acquisition request message transmitted from the store device;
means for verifying the store public key certificate, the receiving permit signature value and the acquisition permit signature value included in the certificate acquisition request message;
means for determining whether the certificate data of the certificate name included in the receiving permit is held or not in the certificate service provider device;
means for encrypting the certificate data by the store public key and transmitting a certificate acquisition response message including the encrypted certificate data and the message identifier to the store device in the case where the certificate data is held in the certificate service provider device;
means for transmitting a certificate issue request message including the acquisition permit of the certificate data, the acquisition permit signature value, the message identifier and the public key certificate of the certificate service provider to the certificate issuing organization device in the case where the certificate data is not held in the certificate service provider device;
means for receiving the certificate issue response message transmitted from the certificate issuing organization device;
means for verifying the public key certificate of the certificate issuing organization included in the certificate issue response message while at the same time verifying the signature attached to the encrypted certificate data included in the certificate issue response message; and
means for acquiring the certificate data by decrypting the encrypted certificate data by the private key of the certificate service provider, holding the acquired certificate data in the certificate service provider device and encrypting the certificate data by the store public key, and transmitting a certificate acquisition response message including the encrypted certificate data and the message identifier to the store device.

The objects described above can be achieved also by a program for implementing the aforementioned functions or a recording medium for storing the program.

### BRIEF DESCRIPTION OF THE DRAWINGS

Fig. 1 is a block diagram showing a system configuration of a certificate issue service system using a certificate issue service method according to an embodiment of the invention.

Fig. 2 is a block diagram showing a configuration of the store device constituting a store computer system.

Fig. 3 is a block diagram showing a configuration of a consumer card device constituting a computer system implemented by the IC card or the like held by the consumer.

Fig. 4 is a block diagram showing a configuration of a certificate service provider device constituting a computer system of a certificate service provider.

Fig. 5 is a block diagram showing a configuration of a certificate issuing organization unit constituting a computer system of the certificate issuing organization.

Fig. 6 is a general flowchart showing the exchange of messages in a certificate issue service system according to an embodiment.

Fig. 7 is a diagram showing a configuration of a certificate issue permit request message sent from the store device to the consumer card device.

Fig. 8 is a diagram showing a configuration of a certificate issue permit response message sent from the consumer card device to the store device.

Fig. 9 is a diagram showing a configuration of a certificate acquisition request message sent from the store device to the certificate service provider device.

Fig. 10 is a diagram showing a configuration of a certificate acquisition response message sent from the certificate service provider device to the store device.

Fig. 11 is a diagram showing a configuration of a certificate issue request message sent from the certificate service provider to the certificate issuing organization.

Fig. 12 is a diagram showing a configuration of a certificate issue response message sent from the certificate issuing organization to the certificate service provider.

### DESCRIPTION OF THE EMBODIMENTS

Embodiments of the present invention will be explained below with reference to the accompanying drawings.

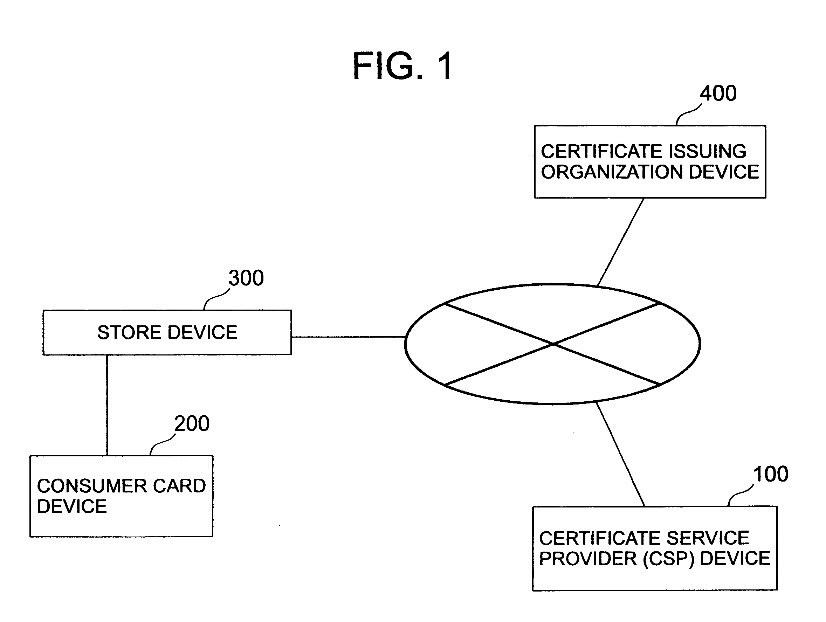

Fig. 1 is a block diagram showing a system configuration of a certificate provider system according to an embodiment of the invention. As shown in Fig. 1, this system comprises a certificate service provider device (hereinafter referred to as CSP) 100, a consumer card device 200, a store device 300 and a certificate issuing organization device 400. The CSP 100, the store unit 300 and the certificate issuing organization device 400 are interconnected through a network. The consumer card device 200 is an IC card held by the consumer receiving the certificate service. When conducting a transaction or filing an application (hereinafter collectively referred to as a transaction), the consumer connects the consumer card device 200 held by him to the store device 300. The store device 300 is installed in a store requiring the certificate of the consumer for a commercial transaction. The CSP 100 stores the certificate of the consumer, or whenever required and whenever entrusted by the consumer, receives the issue of a certificate from the certificate issuing organization and sends it as required by the store device 300. The certificate issuing organization device 400 issues various certificate for the consumer. The various functions described above can be provided also in software. For example, a storage medium for storing the program used in the CSP 100 is provided, which program is read into the memory of the CSP 100 through a drive unit connected to the CSP 100, or can be executed by the CSP 100 by being transmitted through a drive unit connected to another computer, the computer and another network.

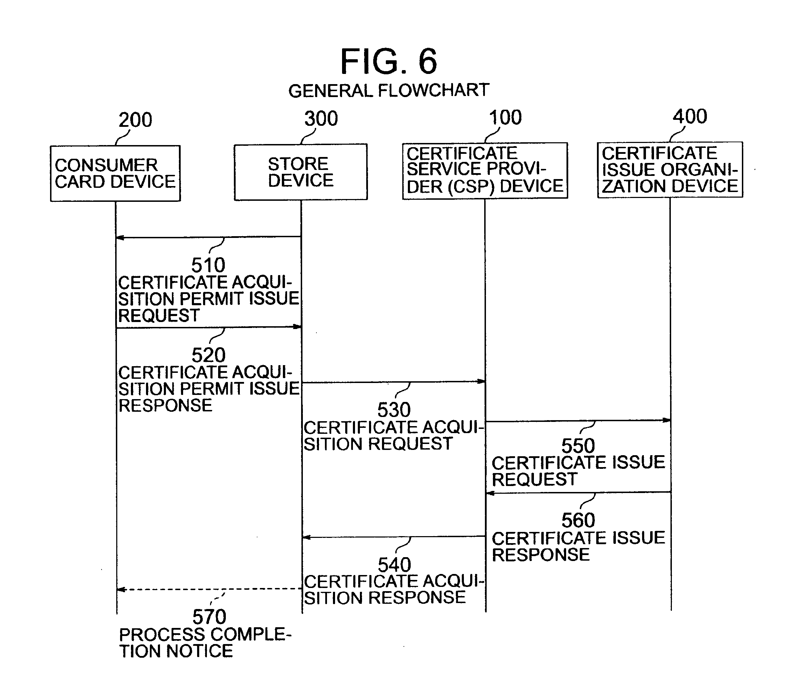

Fig. 6 is a general flowchart showing the exchange of messages in the certificate provider system of Fig. 1.

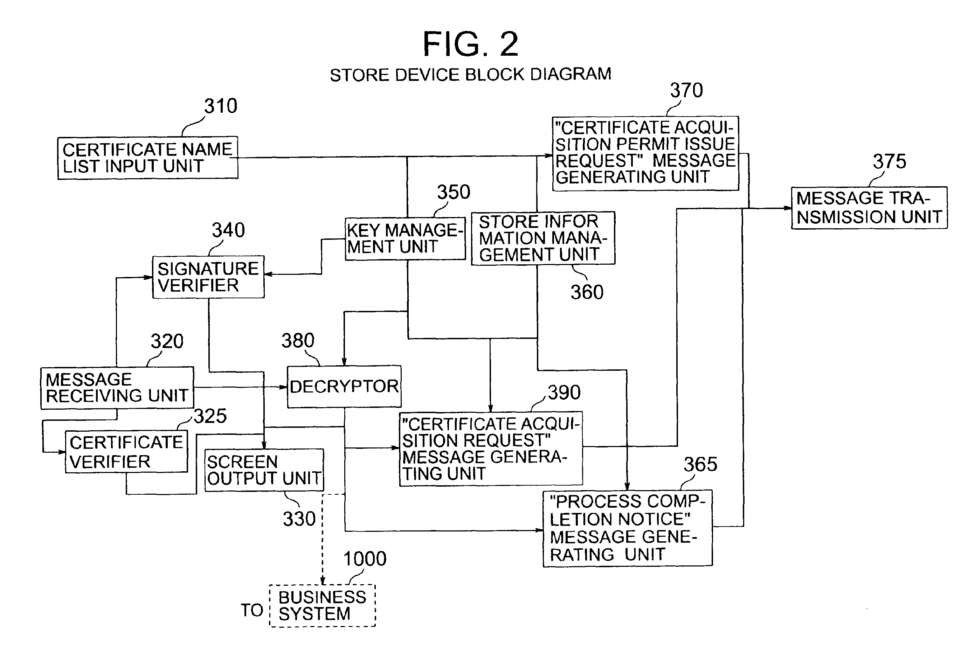

Assume that the consumer tries to conduct a transaction with a store and is required to acquire various certificates for the transaction. Specifically, assume that the consumer conducts a transaction for taking out life insurance with a life insurance company. He requires various certificates including the certificate of the medical examination issued by a medical institution, the labor certificate issued by his employer company and the resident card issued by a municipal office. The names of the certificates required for the transaction and the names of the organizations issuing these certificates are stored beforehand in a store information management unit 360 (described later with reference to Fig. 2) of the store device 300.

In Fig. 6, the consumer trying to conduct a transaction connects the consumer card device 200 held by him to the store device 300. The store device 300 sends a certificate acquisition permit issue request 510 to the consumer card unit 200. The consumer card device 200, upon receipt of the certificate acquisition permit issue request 510, returns a certificate acquisition permit issue response 520. The store device 300, upon receipt of the certificate acquisition permit issue response 520, sends a certificate acquisition request 530 to the CSP 100. The CSP 100, upon receipt of the certificate acquisition request 530, returns a certificate acquisition response 540 including the particular certificate, if in store, to the store device 300. In the case where the particular certificate is not stored in the CSP 100, on the other hand, the CSP 100 sends a certificate issue request 550 to a certificate issue organization device 400. The certificate issue organization device 400, upon receipt of the certificate issue request 550, returns a certificate issue response 560 including the required certificate. The CSP 100, upon receipt of the certificate issue response 560, returns a certificate acquisition response 540 including the acquired certificate to the store device 300. In this way, the store device 300 can acquire the certificate. After acquiring the certificate, the store device 300 returns a process completion notice 570 to the consumer card device 200.

Now, the processing along the flowchart of Fig. 6 in each device will be described in detail below with reference to Figs. 2 to 5. Also, an explanation will be given of the format of the messages exchanged between the devices of Fig. 6.

Fig. 2 is a block diagram showing a configuration of the store device 300. When the consumer tries to conduct some transaction with a store, the "certificate acquisition permit issue request" message generating unit 370 of the store device 300 first acquires the names of the certificates required for the transaction and the names of the organizations issuing the certificates from the store information management unit 360, and prepares a list of the certificate names and the names of the organizations issuing the certificates. The list of the certificate names and the names of the organizations issuing the certificates thus prepared is coupled with a message identifier indicating the certificate acquisition permit issue request and a store public key certificate acquired from a key management unit 350 thereby to generate a certificate acquisition permit issue request 510 which is delivered to a message transmission unit 375. The message transmission unit 375 sends the certificate acquisition permit issue request 510 to the consumer card device 200.

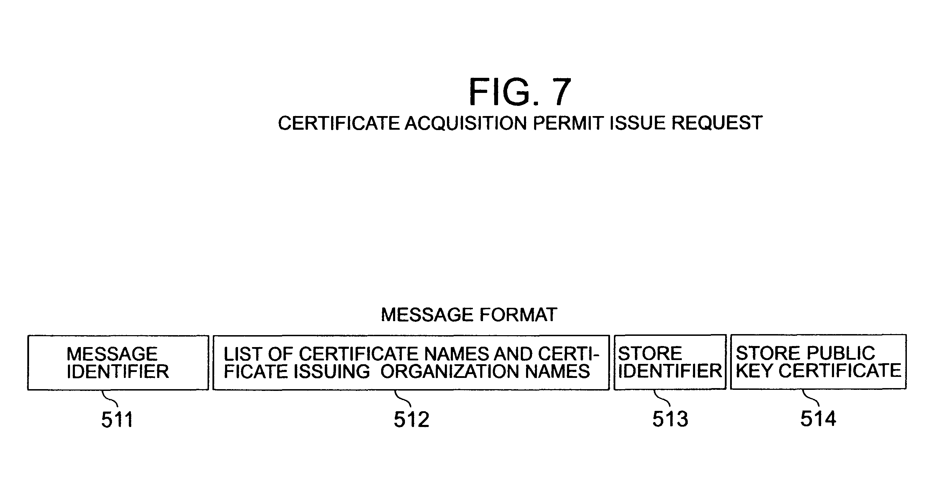

Fig. 7 shows a format of the certificate acquisition permit issue request 510. The certificate acquisition permit issue request 510 includes a message identifier 511, a list 512 of pairs of the certificate names and the names of the certificate issuing organizations, a store identifier 513 and a store public key certificate 514.

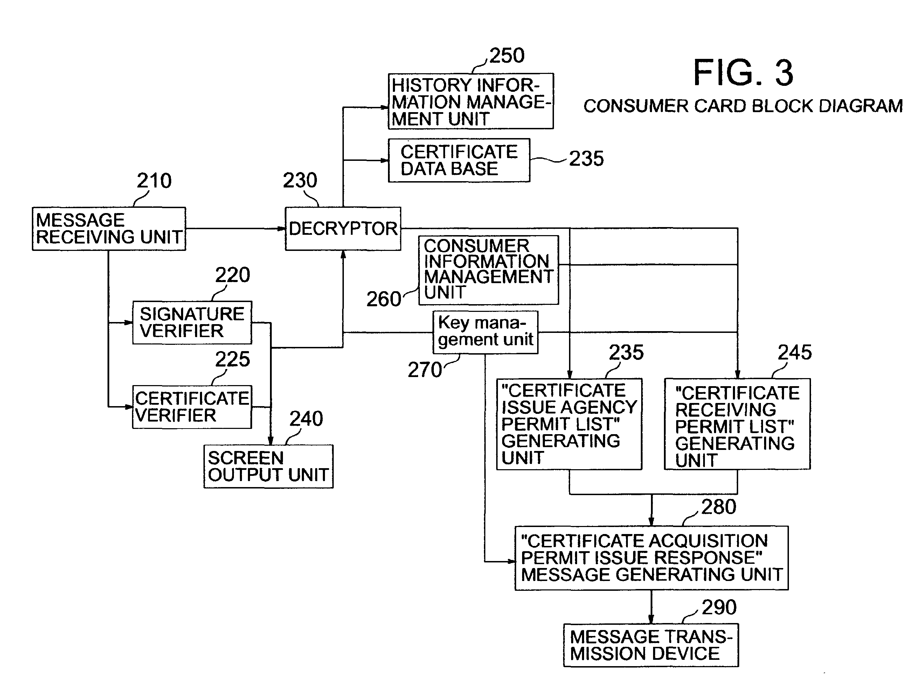

Fig. 3 is a block diagram showing a configuration of the consumer card device 200. In the consumer card device 200, a message receiving unit 210 receives the certificate acquisition permit issue request 510 sent from the store device 300, and sends it to a certificate verifier 225 and a decryptor 239 thereby to verify the store public key certificate 514. In the case where the result of verification indicates any abnormality, a verification failure message is sent out to a screen output unit 240. In the case where the verification is successful, on the other hand, the decryptor 230 sends the list 512 of the certificate names and the names of the certificate issuing organizations, a store identifier 513 and a store public key certificate 514 to a "certificate issue agency permit list" generating unit 235 and a "certificate receiving permit list" generating unit 245. In the case where no certificate is stored in the CSP 100 and the CSP 100 is not entrusted to issue a certificate as an agent, the decryptor 230 is not required to send the list 512 of the certificate names and the names of the certificate issuing organizations, the store identifier 513 and the store public key certificate 514 to the "certificate issue agency permit list" generating unit 235.

The "certificate issue agency permit list" generating unit 235 generates an acquisition permit tuple 524 including a certificate name, a CSP identifier and the due date from the list 512 of the certificate names and the names of the certificate issuing organizations, the CSP identifier acquired from a consumer information management unit 260 and normally used by the consumer and the due date of the certificate issue agency permit acquired from the consumer information management unit 260, and an acquisition permit signature value 525 constituting an electronic signature is attached to each element of the tuple using the private key acquired from the key management unit 270. As a result, a list of tuples of the certificate name, the CSP identifier and the due date is generated with the electronic signature of the consumer attached thereto. The "certificate issue agency permit list" generating unit 235 sends this list with the signature to a "certificate acquisition permit issue response" message generating unit 280.

The "certificate receiving permit list" generating unit 245 generates a receiving permit tuple 522 of the certificate name, the store identifier and the due date from the list 512 of the certificate names and the names of the certificate issuing organizations, the store identifier 513 and the due date of the certificate receiving permit acquired from the consumer information management unit 260, and attaches a receiving permit signature value 523 constituting an electronic signature to each element of the tuple using the consumer private key acquired from the key management unit 270. As a result, a list of tuples including the certificate name, the store identifier and the due date with the electronic signature of the consumer is generated. The "certificate receiving permit list" generating unit 245 sends this list of tuples with the electronic signature to the "certificate acquisition permit issue response" message generating unit 280.

The "certificate acquisition permit issue response" message generating unit 245 sends the list of the tuples with the signature to the "certificate acquisition permit issue response" message generating unit 280.

The "certificate acquisition permit issue response" message generating unit 280 couples the received certificate issue agency permit list to the certificate receiving permit list, and generates the certificate acquisition permit issue response message 520 by further coupling the consumer public key certificate 526 acquired from the key management unit 270 and the message identifier 521, which certificate acquisition permit issue response message 520 is sent to the message transmission unit 290. The "certificate acquisition permit issue response" message generating unit 280, if required, can encrypt the certificate issue agency permit (acquisition permit) list and the certificate receiving permit list using the store public key acquired from the store public key certificate 514. The message transmission unit 290 sends the certificate acquisition permit issue response message 520 to the store device 300.

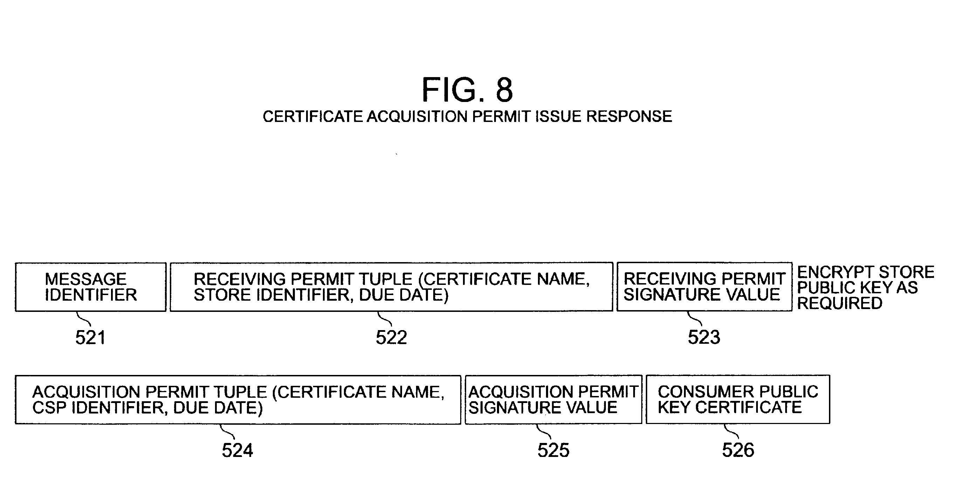

Fig. 8 shows a format of the certificate acquisition permit issue response message 520. The certificate acquisition permit issue response message 520 is configured with a message identifier 521, a receiving permit tuple 522 constituting a list of tuples of the certificate name, the store identifier and the due date, a receiving permit signature value 523 of each tuple, an acquisition permit tuple 524 constituting a list of tuples of the certificate name, the CSP identifier and the due date, an acquisition permit signature value 525 for each tuple and a consumer public key certificate 526.

Returning to Fig. 2, the store unit 300, after the message receiving unit 320 thereof receives the certificate acquisition permit issue response message 520 sent from the consumer card device 200, sends it to the certificate verifier 325, the signature verifier 340 and the decryptor 380.

The certificate verifier 325 verifies the certificate 526 attached to the message 520 received, and if there is any abnormality, notifies a screen output unit 330 and ends the process. In the absence of an abnormality, the process is terminated as it is.

The signature verifier 340 verifies the signatures 523 and 525 attached to the received message 520. Specifically, the hash value for each receiving permit tuple 522 and each acquisition permit tuple 524 is calculated using a predetermined hash algorithm, and it is determined whether each tuple coincides with the receiving permit signature value 533 and the acquisition permit signature value 525 for verification. In the case where the verification fails, the screen output unit 330 is notified and the process is terminated. In the case where the verification is successful, on the other hand, the verification process is terminated as it is.

The decryptor 380 acquires the private key of the store unit from the key management unit 350 and decrypts the certificate issue permit issue response message 520 which may be encrypted. The received message is sent to a "certificate acquisition request" message generating unit 390.

The "certificate acquisition request" message generating unit 390 acquires the receiving permit tuple 522, the corresponding receiving permit signature value 523, the acquisition permit tuple 524, the corresponding acquisition permit signature value 525 and, if required, the consumer public key certificate 526 from the received message, and from these information, the message identifier 531 and the store public key certificate acquired from the store information management unit 360, generates a certificate acquisition request 530 and transmits it to the message transmission unit 375. The message transmission unit 375 sends a certificate acquisition request message 530 to the CSP unit 100.

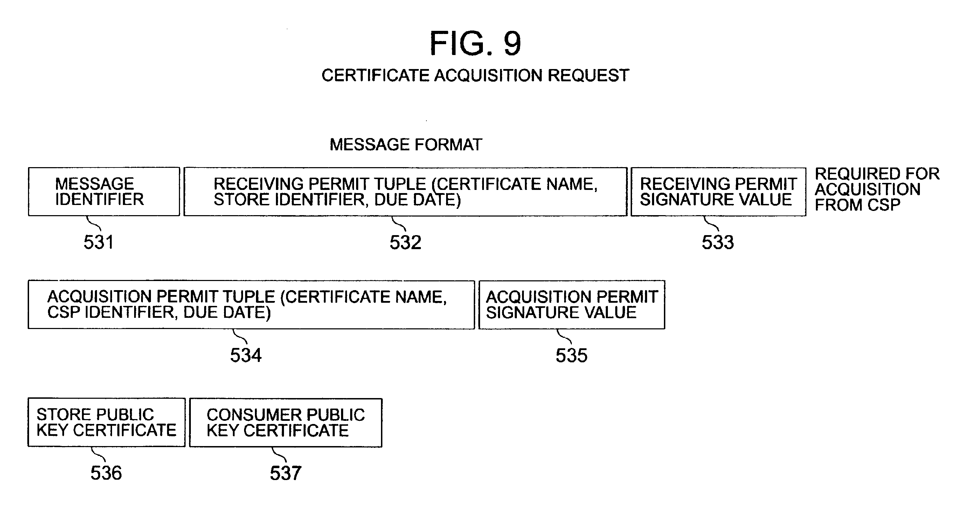

Fig. 9 shows a format of the certificate acquisition request 530. The certificate acquisition request 530 is configured with the message identifier 531, a receiving permit tuple 532 constituting a list of tuples of the certificate name, the store identifier and the due date, a receiving permit signature value 533 of each tuple, an acquisition permit tuple 534 constituting a list of tuples of the certificate name, the CSP identifier and the due date, an acquisition permit signature value 535 of each tuple, a store public key certificate 536 and a consumer public key certificate 537. The consumer public key certificate 537 is attached as required.

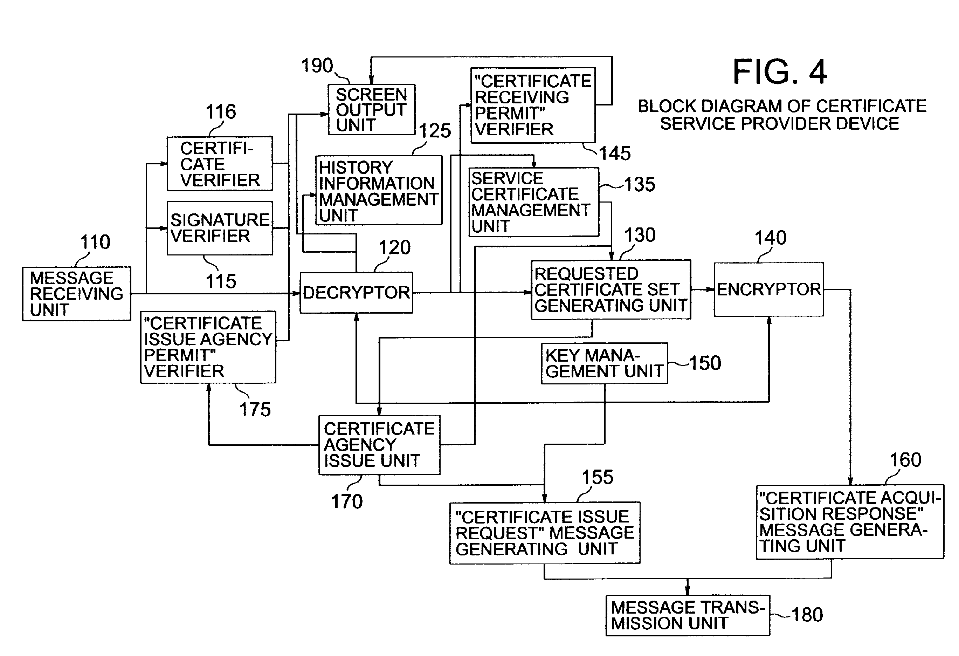

Fig. 4 is a block diagram showing a configuration of the CSP unit 100. The CSP unit 100, upon receipt of the certificate acquisition request message 530 from the store device 300 at the message receiving unit 110 thereof, sends it to the certificate verifier 116, the signature verifier 115 and the decryptor 120.

The certificate verifier 116 verifies the certificates 536 and 537 attached to the received message 530, and if there is any abnormality, notifies the screen output unit 190 and ends the process. In the absence of an abnormality, the process is terminated as it is.

The signature verifier 115 verifies the signatures 533 and 535 attached to the received message 530. Specifically, the hash value for each receiving permit tuple 532 and each acquisition permit tuple 534 is calculated using a predetermined hash algorithm, and it is determined whether they coincides with the receiving permit signature value 533 and the acquisition permit signature value 535, respectively, for verification. In the case where the verification fails, the screen output unit 190 is notified and the process is terminated. In the case where the verification is successful, on the other hand, the verification process is terminated as it is.

The decryptor 120 sends the received data to the requested certificate set generating unit 130.

The requested certificate set generating unit 130 checks whether the CSP identifier is identical or not for each acquisition permit tuple 534 and whether the present time is within the due data that has been set, and then makes an inquiry for each certificate name to the service certificate management unit 135, acquires the certificate from the service certificate management unit 135 and delivers the certificate acquired to the encryptor 140. The certificate names not under the control of the service certificate management unit 135 are delivered to the certificate agency issue unit 170 as a list of the acquisition permit tuples and the acquisition permit signature values corresponding to the particular certificate.

The certificate agency issue unit 170 sends the received acquisition permit tuple 534 and the acquisition permit signature value 535 to the "certificate issue agency permit" verifier 175 and the "certificate issue request" message generating unit 155.

The "certificate issue agency permit" verifier 175 verifies the validity of the acquisition permit. Specifically, it checks whether the due date included in the acquisition permit tuple 534 is valid with respect to the present time. In the case where the due date is not so valid, the screen output unit 10 is notified and the process is terminated. In the case where the due date is valid, on the other hand, the verification is terminated as it is.

The "certificate issue request message" generating unit 155 generates a certificate issue request message 550 by coupling the acquisition permit tuple 534 and the acquisition permit signature value 535 received, the CSP public key certificate 554 acquired from the key management unit 150, and if required, the consumer public key certificate 555 and the store public key certificate 556 received, and the message identifier 551 indicating the certificate issue request to each other, and the certificate issue request message 550 thus generated is delivered to the message transmission unit 180. The message transmission unit 180 transmits the certificate issue request message 550 to the certificate issue organization device 400.

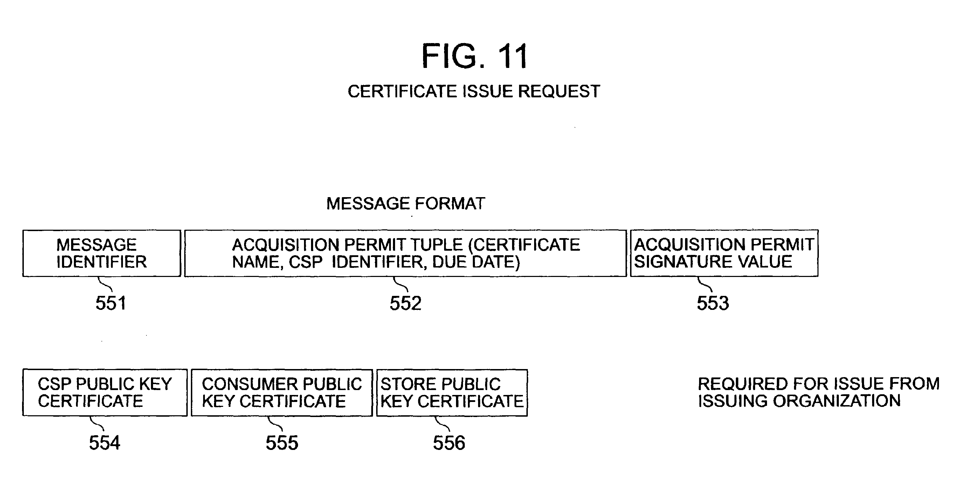

Fig. 11 shows a format of the certificate issue request message 550. The certificate issue request message 550 is configured with a message identifier 551, an acquisition receiving permit tuple 552 constituting a list of the tuples of the certificate name, the CSP identifier and the due date, a corresponding receiving permit signature value 553, a CSP public key certificate 554, a consumer public key certificate 555 and a store public key certificate 556. The consumer public key certificate 555 and the store public key certificate 556 are attached if required.

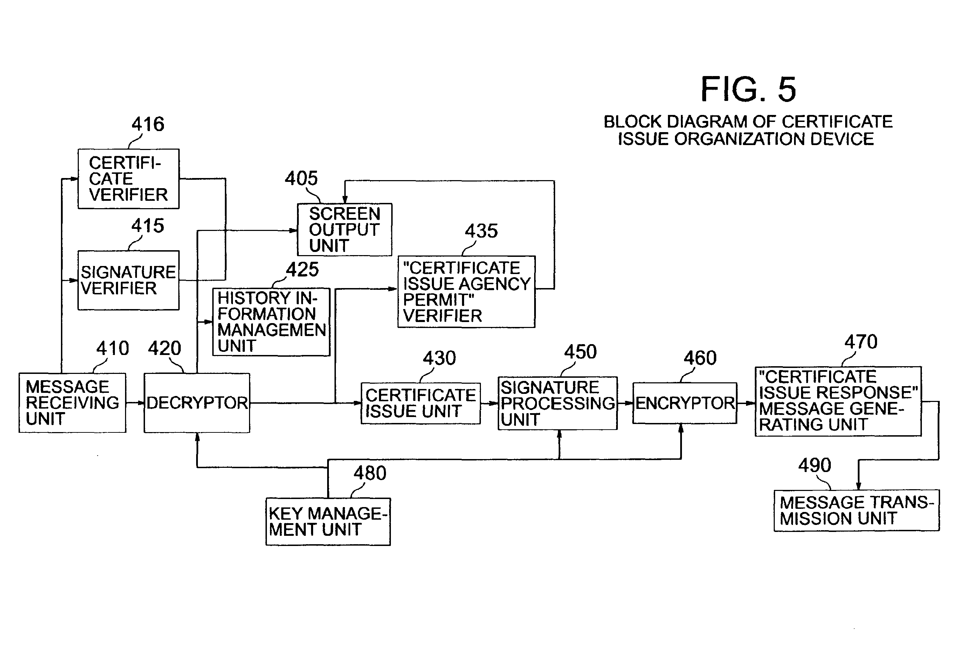

Fig. 5 is a block diagram showing a configuration of the certificate issuing organization device 400. The certificate issuing organization device 400, upon receipt of the certificate issue request 550 from the CSP unit 100 at the message receiving unit 410 thereof, sends it to the certificate verifier 416, the signature verifier 415 and the decryptor 420.

The certificate verifier 416 verifies the certificates 554, 555, 556 attached to the received message 550, and if there is any abnormality, ends the process by notifying the screen output unit 405. If there is no abnormality, the verification process is terminated as it is.

The signature verifier 415 verifies the signature 553 attached to the received message 550. Specifically, the hash value is calculated for each acquisition permit tuple 552 using a predetermined hash algorithm, and it is checked whether it coincides with each acquisition permit signature value 553 or not for verification. In the case where the verification fail, the screen output unit 405 is notified and the process is terminated. In the case where the verification is successful, on the other hand, the verification process is terminated as it is.

The decryptor 420 delivers such information as the certificate name, the name of the consumer who has requested the issue and the intermediary CSP identifier to the history information management unit 425. The decryptor 420 delivers the message 550 received thereby to the "certificate issue agency permit" verifier 435 and the certificate issue unit 430. The history information management unit 425 stores the information delivered thereto in the history information file.

The "certificate issue agency permit" verifier 435 verifies the validity of the acquisition permit. Specifically, it checks whether the due date included in the acquisition permit tuple 552 is valid with respect to the present time. In the case where the due date is not so valid, the screen output unit 405 is notified and the process is terminated. In the case where the due date is so valid, on the other hand, the verification process is terminated as it is.

The certificate issue unit 430 generates the certificate data for each of the certificate names known from the acquisition permit tuple 552, and delivers it to signature processing unit 450. The signature processing unit 450 attaches on each of the certificate data a signature of the certificate issuing organization acquired from the key management unit 480, and delivers it to the encryptor 460. The encryptor 460 encrypts each certificate with the signature using the public key of the requesting CSP acquired from the CSP public key certificate 554. If required, the certificate encrypted by the store public key acquired from the store public key certificate 556 and the certificate encrypted by the consumer public key acquired from the consumer public key certificate 555 are prepared and delivered at the same time to the "certificate issue response" message generating unit 470.

The "certificate issue response" message generating unit 470 generates a certificate issue response message 560 by coupling the delivered data, the message identifier 561 indicating the certificate issue response message and the public key certificate 565 of the certificate issue organization, and delivers it to the message transmission unit 490. The message transmission unit 490 sends the certificate issue response message 560 to the CSP unit 100.

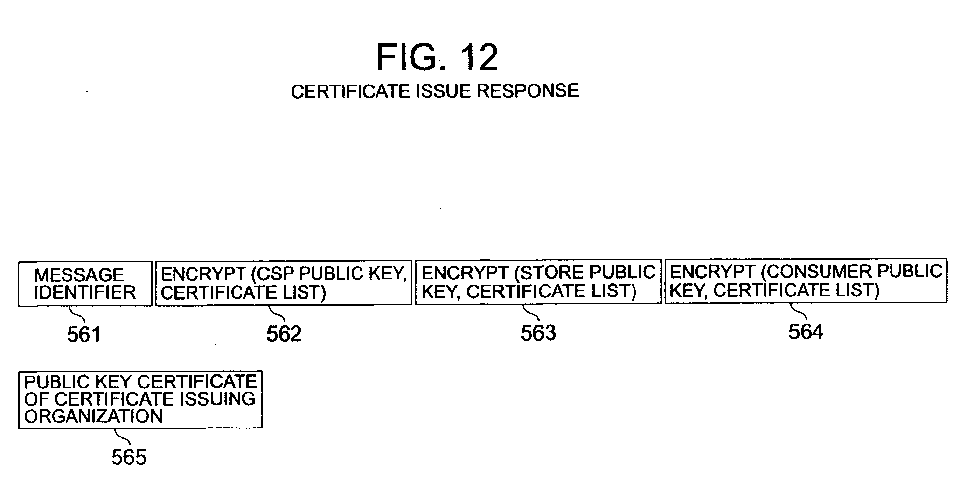

Fig. 12 shows a format of the certificate issue response message 560. The certificate issue response message 560 is configured with a message identifier 561, a list 562 of the certificates encrypted by the public key of the CSP, a list 563 of the certificates encrypted by the store public key, a list 564 of the certificates encrypted by the consumer public key and a public key certificate 565 of the certificate issuing organization. The lists 563 and 564 of the encrypted certificates are attached as required.

Referring to Fig. 4 again, the message receiving unit 110 of the CSP unit 100 receives the certificate issue response message 560 sent from the certificate issuing organization device 400, which are delivered to the certificate verifier 116, the signature verifier 115 and the decryptor 120.

The certificate verifier 116 verifies the certificate 565 attached to the message 560 received, and if there is any abnormality, terminates the process by notifying the screen output unit 190. In the case where there is no abnormality, on the other hand, the verification process is terminated as it is. The signature verifier 115 verifies the signature of the certificate issuing organization attached in the encrypted certificate lists 562, 563, 564 of the received message 560. In the case where the verification fails, the screen output unit 190 is notified and the process the terminated. In the case where the verification is successful, on the other hand, the verification process is terminated as it is.

The decryptor 120 decrypts the encrypted certificate 562 using the CSP private key acquired from the key management unit 150, and delivers it to the service certificate management unit 135 and the requested certificate set generating unit 130. Also, the acquired certificate name, the requester name and the name of the issuing organization are delivered to the history information management unit 125.

The service certificate management unit 135 registers the newly acquired certificate in the service certificate data base in preparation for future requests. The requested certificate set generating unit 130 delivers the acquired certificate to the encryptor 140. The encryptor 140 encrypts the received certificate by the store public key acquired from the store public key certificate 536. If required, the certificate encrypted by the consumer public key acquired from the consumer public key certificate 537 is also prepared and delivered to the "certificate acquisition response" message generating unit 160 at the same time.

As explained with reference to the operation of the certificate issuing organization device 400 and the format shown in Fig. 12, the list 563 of the certificates encrypted by the store public key and the list 564 of the certificates encrypted by the consumer public key in the certificate issue response message 560 are optional data. In the case where the certificate issue response message 560 contains the list 563 of the certificates encrypted by the store public key, the particular data can be used as they are, and the encryption of the certificate data by the encryptor 140 using the store public key is not required. Also in the case where the certificate issue response message 560 contains the list 564 of the certificates encrypted by the consumer public key, the particular data can be used as they are, and therefore the encryption of the certificate data by the encryptor 140 using the consumer public key is not required.

The "certificate acquisition response" message generating unit 160 generates the certificate acquisition response message 540 from the encrypted certificate delivered thereto and the message identifier indicating the certificate acquisition response message, and delivers it to the message transmission unit 180. The message transmission unit 180 sends the certificate acquisition response message 540 to the store device 300.

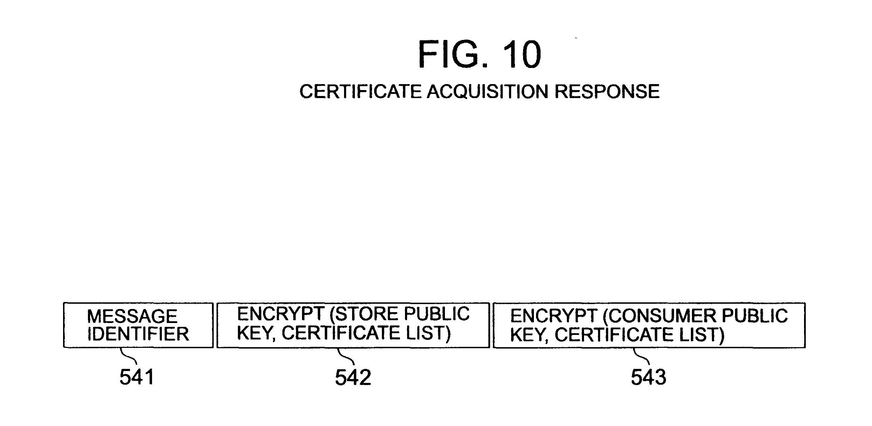

Fig. 10 shows a format of the certificate acquisition response message 540. The certificate acquisition response message 540 is configured with the message identifier 541, the list 542 of the certificates encrypted by the store public key and the list 543 of the certificates encrypted by the consumer public key. The list 543 of the certificates encrypted by the consumer public key is attached as required.

Referring to Fig. 2 again, the message receiving unit 320 of the store device 300 receives the certificate acquisition response message 540 sent thereto from the CSP 100, which message 540 is sent to the decryptor 380. The decryptor 380 acquires the private key of the store device from the key management unit 350 and decrypts the message, and thus acquires the desired certificate and delivers it to the business system 1000. If required, the "process completion notice" message generating unit 365 is notified that the process is completed. The "process completion notice" message generating unit 365 couples the list of the certificate names acquired in this transaction, the list of the certificate names acquired by CSP as agency, the acquired certificate 543 encrypted by the consumer public key as well as the process completion message, and thus generating the process completion notice message 570, delivers it to the consumer card device 200.

Referring to Fig. 3 again, the message receiving unit 210 of the consumer card device 200 receives the process completion notice message 570 sent from the store device 300, which message is delivered to the decryptor 230. The decryptor 230 delivers the list of the acquired certificate names and the list of the certificate names acquired by the CSP as agency to the history information management unit 350. Also, the certificate 543 can be decrypted using the private key acquired from the key management unit 270 and registered in the certificate data base 235.

It will thus be understood from the foregoing description that according to this invention various certificates can be securely issued and received by the user such as the consumer using a public key certificate whenever required for conducting various transactions. Also, the certificate service provider can store a certificate, and therefore the certificate can be issued to the consumer even when the certificate issuing organization is out of service. Further, according to this invention, the contents of the certificate are not disclosed to other than a legitimate party, and therefore a certificate containing private information can also be issued securely.

## Claims

1. A method of issuing a certificate in such a manner that the card device of the user is connected to a store device at which the required certificate data on the user can be acquired, comprising the steps of:
connecting a certificate service provider device (100) to a communication network connected to the store device (300) and a certificate issuing organization device (400) for issuing the certificate data, and sending to said card device (200) a certificate acquisition permit issue request message including a message identifier, the name of the certificate of the certificate data to be acquired, the name of the certificate issuing organization for issuing the certificate data, the store identifier for the said store device and the store public key certificate of said store device;
verifying the store public key certificate in the card device that has received the certificate acquisition permit issue request message, generating a receiving permit including the certificate name and the store identifier, generating the signature of the user constituting a receiving permit signature value for the receiving permit, and sending to the store device a certificate acquisition permit issue response message including the receiving permit, the receiving permit signature value, the message identifier and the user public key certificate;
verifying the user public key certificate and the receiving permit signature value in said store device that has received the certificate acquisition permit issue response message, and transmitting to said certificate service provider device a certificate acquisition request message including the receiving permit, the receiving permit signature value, the message identifier and the store public key certificate;
verifying the store public key certificate and the receiving permit signature value in the certificate service provider device that has received the certificate acquisition request message, encrypting, by the store public key, the certificate data of the certificate name included in the receiving permit, which certificate data may be held in said certificate service provider device, and transmitting the encrypted certificate data and the message identifier to said store device as a certificate acquisition response message; and
acquiring the certificate data by decrypting the encrypted certificate data by the store private key in said store device that has received the certificate acquisition response message.

2. A method of issuing a certificate in such a manner that the card device (200) of the user is connected to a store device (300) at which the required certificate data on the user can be acquired, comprising the steps of:
connecting a certificate service provider device (100) to a communication network connected to a store device (300) and a certificate issuing organization device (400) for issuing the certificate data, and sending from said store device to said card device (200) a certificate acquisition permit issue request message including a message identifier, the name of the certificate of the certificate data to be acquired, the name of the certificate issuing organization for issuing the certificate data, the store identifier for said store device and the store public key certificate of said store device;
verifying the store public key certificate in said card device that has received the certificate acquisition permit issue request message, generating a receiving permit including the certificate name and the store identifier, generating the signature of the user constituting the receiving permit signature value for the receiving permit, generating an acquisition permit including the certificate name and the certificate service provider identifier, generating the signature of the user constituting the acquisition permit signature value for the acquisition permit, and sending a certificate acquisition permit issue response message including the receiving permit, the receiving permit signature value, the acquisition permit, the acquisition permit signature value, the message identifier and the user public key certificate to said store device;
verifying the user public key certificate, the receiving permit signature value and the acquisition permit signature value in said store device that has received the certificate acquisition permit issue response message, and transmitting to said certificate service provider device a certificate acquisition request message including the receiving permit, the receiving permit signature value, the acquisition permit, the acquisition permit signature value, the message identifier and the store public key certificate;
verifying the store public key certificate, the receiving permit signature value and the acquisition permit signature value in said certificate service provider device that has received the certificate acquisition request message, determining whether the certificate data of the certificate name included in the receiving permit is held in said certificate service provider device, encrypting, by the store public key, the certificate data of the certificate name included in the receiving permit and transmitting the encrypted certificate data and the message identifier to said store device as a certificate acquisition response message in the case where the certificate data is held in the certificate service provider device, or transmitting the acquisition permit of the certificate data, the acquisition permit signature value, the message identifier and the public key certificate of the certificate service provider to said certificate issuing organization device as a certificate issue request message in the case where the certificate data is not held in said certificate service provider device; and
verifying the provider public key certificate and the acquisition permit signature value in said certificate issuing organization device that has received the certificate issue request message, generating the certificate data of the certificate name included in the acquisition permit, attaching the signature to the certificate data using the private key of the certificate issuing organization, encrypting the certificate data with signature by the public key of said certificate service provider, and transmitting the encrypted certificate data, the message identifier and the public key certificate of the certificate issuing organization to said certificate service provider device as a certificate issue response message;
verifying the public key certificate of the certificate issuing organization in said certificate service provider device that has received the certificate issue response message, verifying the signature attached to the encrypted certificate data, acquiring the certificate data by decrypting the encrypted certificate data by the private key of said certificate service provider, holding and encrypting the acquired certificate data by the store public key in said certificate service provider device, and transmitting the encrypted certificate data and the message identifier to said store device as a certificate acquisition response message; and
acquiring the certificate data by decrypting the encrypted certificate data by the store private key in said store device that has received the certificate acquisition response message.

3. A method of issuing a certificate according to Claim 2, wherein the receiving permit and/or the acquisition permit includes information on the due date, said certificate service provider device verifies the validity of the receiving permit and/or the acquisition permit in the received certificate acquisition request message by referring to the due date thereof, and said certificate issuing organization device verifies the validity of the acquisition permit in the received certificate issue request message by referring to the due date thereof.

4. A method of issuing a certificate according to Claim 2, wherein said certificate service provider device transmits the certificate issue request message including the store public key certificate to said certificate issuing organization device, said certificate issuing organization that has received the certificate issue request message verifies the store public key certificate, encrypts the certificate data with the signature of the certificate issuing organization by the store public key and causes the certificate data encrypted by the store public key to be included in the certificate issue response message, and said certificate service provider device that has received the certificate issue response message uses the certificate data encrypted by the store public key included in the certificate issue response message instead of encrypting the certificate data by the store public key.

5. A method of issuing a certificate according to Claim 2, wherein the user public key certificate is included in the certificate acquisition request message transmitted to said certificate service provider device from said store device, the certificate service provider device that has received the certificate acquisition request message transmits the certificate issue request message including the user public key certificate to said certificate issuing organization device, said certificate issuing organization device that has received the certificate issue request message verifies the user public key certificate, encrypts the certificate data with the signature of said certificate issuing organization by the user public key and causes the certificate data encrypted by the user public key to be included in the certificate issue response message, said certificate service provider device that has received the certificate issue response message causes the certificate data encrypted by the user public key to be included in the certificate acquisition response message, said store device that has received the certificate acquisition response message sends a process completion message including the certificate data encrypted by the user public key to said card device, and said card device that has received the process completion message acquires the certificate data by decrypts the encrypted certificate data using the user private key and registers the acquired certificate data in the storage means in said card device.

6. A certificate issue service system comprising a store device (300) connected with a card device (200) of the user, and a certificate issuing organization device (400) and a certificate service provider device (100) connected to the store device through a communication network:
wherein said store device includes means (375) for sending a message identifier, the certificate name of the certificate data to be acquired, the name of the certificate issuing organization for issuing the certificate data, the store identifier for the store device and the store public key certificate of said store device to said card device as a certificate acquisition permit issue request message; means for (325) verifying the user public key certificate and the receiving permit signature value included in the certificate acquisition permit issue response message upon receipt of the certificate acquisition permit issue response message sent from said card device, and transmitting a certificate acquisition request message including the receiving permit, the receiving permit signature value, the message identifier and the store public key certificate to said certificate service provider device; and means (380) for acquiring the certificate data by decrypting the encrypted certificate data included in the certificate acquisition response message by the store private key upon receipt of the certificate acquisition response message transmitted said the certificate service provider device,
wherein said card device includes means (225) for verifying the store public key certificate included in the certificate acquisition permit issue request message upon receipt of the certificate acquisition permit issue request message sent from said store device, generating the receiving permit including the certificate name and the storage identifier included in the certificate acquisition permit issue request message, means for generating the signature of the user constituting the receiving permit signature value for the receiving permit, and transmitting a certificate acquisition permit issue response message including the receiving permit, the receiving permit signature value, the message identifier and the user public key certificate to said store device, and
wherein said certificate service provider device includes means (116) for verifying the store public key certificate and the receiving permit signature value included in the certificate acquisition request message upon receipt of the certificate acquisition request message transmitted from the store device, and encrypting, by the store public key, the certificate data of the certificate name included in the receiving permit which may be held in said certificate service provider device and transmitting a certificate acquisition message including the encrypted certificate data and the message identifier to said store device.

7. A certificate issue service system comprising a store device (300) connected with a card device (200) of the user, a certificate issuing organization device (400) and a certificate service provider device (100) connected to the store device through a communication network:
wherein said store device includes means for (375) sending a certificate acquisition permit issue request message including a message identifier, the certificate name of the certificate data to be acquired, the name of the certificate issuing organization for issuing the certificate data, the store identifier for the store device and the store public key certificate of said store device to the card device; means (325) for verifying the user public key certificate, the receiving permit signature value and the acquisition permit signature value included in the certificate acquisition permit issue response message upon receipt of the certificate acquisition permit issue response message sent from said card device, and transmitting a certificate acquisition request message including the receiving permit, the receiving permit signature value, the acquisition permit certificate, the acquisition permit signature value, the message identifier and the store public key certificate to said certificate service provider device; and means (380) for acquiring the certificate data by decrypting the encrypted certificate data included in the certificate acquisition response message by the store private key upon receipt of the certificate acquisition response message transmitted from said certificate service provider device,
wherein said card device includes means for (225) verifying the store public key certificate included in the certificate acquisition permit issue request message upon receipt of the certificate acquisition permit issue request message sent from said store device, generating the receiving permit including the certificate name and the store identifier included in the certificate acquisition permit issue request message, generating the acquisition permit including the certificate name and the certificate service provider identifier included in the certificate acquisition permit issue request message, generating the signature of the user constituting the acquisition permit signature value for the acquisition permit, and transmitting a certificate acquisition permit issue response message including the receiving permit, the receiving permit signature value, the acquisition permit, the acquisition permit signature value, the message identifier and the user public key certificate to the store device, and
wherein said certificate service provider device includes means (116) for verifying the store public key certificate, the receiving permit signature value and the acquisition permit signature value included in the certificate acquisition request message upon receipt of the certificate acquisition request message transmitted from said store device, determining whether the certificate data of the certificate name included in the receiving permit is held or not said the certificate service provider device, and encrypting the certificate data by the store public key and transmitting the encrypted certificate data and message identifier to the store device as a certificate acquisition response message in the case where the certificate data of the certificate name included in the receiving permit is held in said certificate service provider device, or transmitting a certificate issue request message including the acquisition permit of the certificate data, the acquisition permit signature value, the message identifier and the public key certificate of the certificate service provider to said certificate issuing organization device in the case where the certificate data of the certificate name included in the receiving permit is not held said the certificate service provider device; and means for verifying the public key certificate of the certificate issuing organization included in the certificate issue response message upon receipt of the certificate issue response message transmitted from said certificate issuing organization device, verifying the signature attached to the encrypted certificate data included in the certificate issue response message, acquiring the certificate data by decrypting the encrypted certificate data by the private key of the certificate service provider, holding the acquired certificate data in said certificate service provider device while at the same time encrypting the certificate data by the store public key, and transmitting the encrypted certificate data and the message identifier to the store device as a certificate acquisition response message, and
wherein said certificate issuing organization device includes means for (416) verifying the provider public key certificate and the acquisition permit signature value included in the certificate issue request message upon receipt of the certificate issue request message transmitted from said certificate service provider device, generating the certificate data of the certificate name included in the acquisition permit, attaching the signature to the certificate data using the private key of the certificate issuing organization, encrypting the certificate data with the signature by the public key of the certificate service provider, and transmitting a certificate issue response message including the encrypted certificate data, the message identifier and the public key certificate of the certificate issuing organization to said certificate service provider device.

8. A certificate service provider device (100) used for the certificate issue service in which the card device (200) of the user is connected to a store device (300) thereby to acquire the required certificate data on the user in the store device, comprising:
means (170) connected to a communication network connected to the store device and a certificate issuing organization for issuing the certificate data, the means receiving the certificate acquisition request message transmitted from said store device;
means (116) for verifying the store public key certificate, the receiving permit signature value and the acquisition permit signature value included in the certificate acquisition request message;
means for determining whether the certificate data of the certificate name included in the receiving permit is held or not in said certificate service provider device;
means (140) for encrypting the certificate data by the store public key and transmitting a certificate acquisition response message including the encrypted certificate data and the message identifier to said store device in the case where the certificate data is held in said certificate service provider device;
means (180) for transmitting a certificate issue request message including the acquisition permit of the certificate data, the acquisition permit signature value, the message identifier and the public key certificate of the certificate service provider to said certificate issuing organization device in the case where the certificate data is not held in said certificate service provider device;
means (110) for receiving the certificate issue response message transmitted from said certificate issuing organization device;
means (115) for verifying the public key certificate of the certificate issuing organization included in the certificate issue response message while at the same time verifying the signature attached to the encrypted certificate data included in the certificate issue response message; and
means (120) for acquiring the certificate data by decrypting the encrypted certificate data by the private key of the certificate service provider, holding the acquired certificate data in said certificate service provider device and encrypting the certificate data by the store public key, and transmitting a certificate acquisition response message including the encrypted certificate data and the message identifier to said store device.

9. A recording medium for storing a certificate service program for implementing the certificate service provider unit according to Claim 8.

10. A computer program embodied on a recording medium according to Claim 9.

11. A certificate service program for implementing the certificate service provider unit according to Claim 8.
